(19) Europäisches Patentamt
European Patent Office
Office européen des brevets

(11) EP 3 369 761 B1

(12) EUROPÄISCHE PATENTSCHRIFT

(45) Veröffentlichungstag und Bekanntmachung des Hinweises auf die Patenterteilung:
**01.06.2022 Patentblatt 2022/22**

(21) Anmeldenummer: **17159179.5**

(22) Anmeldetag: **03.03.2017**

(51) Internationale Patentklassifikation (IPC):
***C08G 69/34*** (2006.01) ***C08G 69/26*** (2006.01)
***C08L 77/08*** (2006.01)

(52) Gemeinsame Patentklassifikation (CPC):
**C08G 69/265; C08G 69/34; C08L 77/08**

(54) **COPOLYAMIDE ENTHALTEND DIMERE FETTSÄURE ALS MONOMER**

COPOLYAMIDES COMPRISING DIMERIC FATTY ACID AS MONOMER

COPOLYAMIDES COMPRENANT UN ACIDE GRAS DIMÉRISÉ EN TANT QUE MONOMÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.09.2018 Patentblatt 2018/36**

(73) Patentinhaber: **EMS-CHEMIE AG**
**7013 Domat/Ems (CH)**

(72) Erfinder:
- **HOFFMANN, Botho**
**7013 Domat / Ems (CH)**
- **AEPLI, Etienne**
**7013 Domat / Ems (CH)**
- **WIEDEMANN, Thomas**
**7013 Domat / Ems (CH)**

(74) Vertreter: **Pfenning, Meinig & Partner mbB**
**Patent- und Rechtsanwälte**
**Theresienhöhe 11a**
**80339 München (DE)**

(56) Entgegenhaltungen:
**EP-A1- 0 469 435 EP-A1- 2 298 830**
**EP-A1- 2 957 598**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft Copolyamide, die aus cycloaliphatischen Diaminen, aromatischen Dicarbonsäuren, dimeren Fettsäuren und gegebenenfalls aliphatischen Dicarbonsäuren gebildet sind. Weiterhin betrifft die Erfindung eine Formmasse, die mindestens eines dieser Copolyamide enthält und Formkörper aus dieser Formmasse. Außerdem betrifft die Erfindung die Verwendung der Formkörper in den Bereichen Automobil, Elektro, Elektronik, Haushalt, Gastronomie, Labor, Sport, Freizeit, Spielzeug, Dekor, Maschinenbau, Mess-, Regelungs- und Steuertechnik.

Im Stand der Technik sind bereits Copolyamide aus cycloaliphatischen Diaminen und dimeren Fettsäuren beschrieben.

EP 0469 435 A1 betrifft amorphe Copolyamide aus a) 50 Mol-% wenigstens eines cycloaliphatischen Diamins der Formel I,

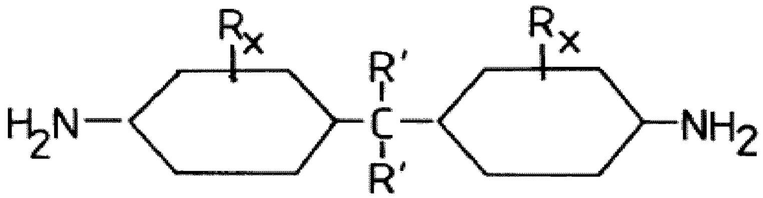

I

worin R für einen Alkylrest mit 1 bis 10 Kohlenstoffatomen steht, R' Wasserstoff oder einen Alkylrest mit 1 bis 4 Kohlenstoffatomen bedeutet und x 0 bis 4 ist, b) 5 bis 25 Mol-% einer dimerisierten Fettsäure, c) 25 bis 45 Mol-% mindestens einer aromatischen Dicarbonsäure, wobei sich die Molsumme der Komponenten a) bis c) zu 100% ergänzt, und wahlweise d) 0 bis 50 Mol-% auf Basis der Summe von a), b) und c) weiteren polyamidbildenden Monomeren. Diese Copolyamide lassen sich, vorzugsweise nach Spritzgußverfahren, leicht zur Herstellung von Formteilen verwenden, die sich durch hohe Steifigkeit und Schlagzähigkeit, durch hohe Glasumwandlungstemperatur und geringe Feuchtigkeitsaufnahme auszeichnen, insbesondere für Formteile mit dünner Wandstärke, ferner können sie durch Extrusion zu steifen Rohren oder Ummantelungen von beispielsweise Lichtwellenleitern verarbeiten werden. Im Folienbereich können sie in Kombination mit anderen Polymeren beispielsweise durch Coextrusionsverfahren verarbeitet werden.

EP 2 957 598 A1 betrifft ein Komposit, das ein Matrixmaterial aus einem amorphen Polyamid mit einer Glasübergangstemperatur von mindestens 180 °C enthält. Die erfindungsgemäßen Komposite finden Verwendung für die Herstellung von verstärkten Bauteilen in den Bereichen Sport, Freizeit, Maschinenindustrie, Elektronik, Bau, Medizintechnik, Verkehrs- und Transportmittel und Luft- und Raumfahrttechnik.

Die EP 2 298 830 A1 ist gerichtet auf die Verwendung von Polyamiden auf Basis von Reaktionsprodukten aus mindestens einer Dimerfettsäure, mindestens einer aliphatischen Dicarbonsäure mit 6 bis 24 C-Atomen und aliphatischen, cycloaliphatischen und/oder Polyetherdiaminen, wobei die Mengen der Aminkomponente so gewählt werden, dass überwiegend endständige Amingruppen enthalten sind und das Polyamid eine Aminzahl von 2 bis 20 mg KOH/g aufweist.

Die aus dem Stand der Technik bekannten Copolyamide, die als ein Monomer eine dimere Fettsäure enthalten, weisen keine hohen relativen Viskositäten und Glasübergangstemperaturen auf. Der Grund dafür liegt darin, dass die Rührwerke der Autoklaven im Drehmoment begrenzt sind, was durch die Stabilität des Rührwerks oder durch die Leistung des Antriebsmotors bedingt sein kann. Niedrige relative Viskositäten von Polyamiden führen zu schlechten mechanischen Eigenschaften für die daraus hergestellten Formkörpern.

Außerdem zeigen die Polyamide aus dem Stand der Technik hohe Schmelzeviskositäten. Polyamide mit hohen Schmelzeviskositäten sind schwierig zu Verarbeiten, insbesondere die Verarbeitung zu großen Teilen oder zu Teilen mit geringer Wandstärke gestaltet sich schwierig.

Davon ausgehend war es Aufgabe der vorliegenden Erfindung Copolyamide mit dimerer Fettsäure als Monomer bereitzustellen, die hohe relative Viskositäten und Glasübergangstemperaturen aufweisen. Weiterhin sollen Formkörper aus diesen Copolyamiden gute mechanische Eigenschaften, insbesondere gute Zähigkeiten aufweisen und gut verarbeitbar sein.

Diese Aufgabe wird durch das amorphe oder mikrokristalline Copolyamid (A) mit den Merkmalen des Anspruchs 1 gelöst, welches die folgenden Monomere enthält:

(a) mindestens ein cycloaliphatisches Diamin;
(b) 0,25 bis 4,4 Mol-% mindestens einer dimeren Fettsäure; und
(c) 12 bis 49,75 Mol-% aromatische Dicarbonsäuren ausgewählt aus der Gruppe bestehend aus Isophthalsäure, Terephthalsäure und Naphthalindicarbonsäure, wobei der Anteil an Isophthalsäure 7 bis 44 Mol-% beträgt, und
(d) 0 bis 37,75 Mol-% mindestens einer aliphatischen Dicarbonsäure;

wobei der molare Anteil an Isophthalsäure mindestens gleich dem molaren Anteil an Terephthalsäure ist, und wobei sich die Monomere (b), (c) und gegebenenfalls (d) zu 50 Mol-% addieren und sich die molaren Anteile aller im Copolyamid (A) enthaltenen Monomere auf 100 Mol-% ergänzen.

Die abhängigen Ansprüche 2 bis 10 betreffen bevorzugte Ausführungsformen dieses Copolyamids.

Eine weitere Aufgabe der vorliegenden Erfindung besteht in der Bereitstellung von Formmassen, die das Copolyamid (A) und gegebenenfalls auch Zusatzstoffe (B) und/oder weitere Polymere (C) enthalten. Diese Aufgabe wird durch Anspruch 11 gelöst. Der Anspruch 12 betrifft eine bevorzugte Formmasse.

Der unabhängige Anspruch 13 betrifft die Verwendung der Formmassen nach einem der Ansprüche 11 oder 12 zur Herstellung von Formkörpern. Anspruch 14 betrifft einen Formkörper aus einer Formmasse gemäß einem der Ansprüche 11 oder 12 und der Anspruch 15 betrifft Verwendungen dieses Formkörpers.

## Begriffsdefinitionen

### Schreibweisen und Abkürzungen für Polyamide und deren Monomere

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der ISO-Norm 1874-1 (2011, (D)) festgelegten. Die darin verwendeten Abkürzungen werden im Folgenden synonym zu den IUPAC Namen der Monomere verwendet. Insbesondere kommen folgende Abkürzungen für Monomere in der vorliegenden Anmeldung vor MACM für Bis(4-amino-3-methyl-cyclohexyl)methan (auch als 3,3'-Dimethyl-4,4'-diaminodicyclohexylmethan bezeichnet, CAS-Nr. 6864-37-5), TMDC für Bis(4-amino-3,5-dimethyl-cyclohexyl)methan (auch als 3,3',5,5'-Tetramethyl-4,4'-diaminodicyclohexylmethan bezeichnet, CAS-Nr. 65962-45-0), PACM für Bis(4-amino-cyclohexyl)methan (auch als 4,4'-Diaminodicyclohexylmethan bezeichnet, CAS-Nr. 1761-71-3), T für Terephthalsäure (CAS-Nr. 100-21-0), I für Isophthalsäure (CAS-Nr. 121-95-5), 36 für dimere Fettsäure mit 36 Kohlenstoffatomen (CAS-Nr. 68783-41-5 oder 61788-89-4), 12 für Dodecandisäure (auch 1,10-Decandicarbonsäure genannt, CAS-Nr. 693-23-2), CHD für 1,4-Cyclohexandicarbonsäure (CAS-Nr. 1076-97-7) und 12 für Laurinlactam (CAS-Nr. 947-04-6).

### Amorphe oder mikrokristalline Polyamide

Amorphe oder mikrokristalline Polyamide zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von maximal 50 J/g, besonders bevorzugt von maximal 25 J/g, ganz besonders bevorzugt 0 bis 22 J/g.

Mikrokristalline Polyamide sind teilkristalline Polyamide und besitzen daher einen Schmelzpunkt. Sie haben jedoch eine Morphologie, bei der die Kristallite eine so kleine Dimension haben, dass eine daraus hergestellte Platte mit einer Dicke von 2 mm noch transparent ist, d.h. ihre Lichttransmission mindestens 75 % beträgt, gemessen nach ASTM D 1003-13 (2013).

Bei den für die erfindungsgemäße Polyamid-Formmasse verwendeten mikrokristallinen Polyamiden beträgt der Schmelzpunkt gemessen nach ISO 11357 (2013) bevorzugt maximal 255 °C.

Amorphe Polyamide weisen, verglichen mit den mikrokristallinen Polyamiden, eine geringere Schmelzwärme auf. Die amorphen Polyamide zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von maximal 5 J/g, besonders bevorzugt von maximal 3 J/g, ganz besonders bevorzugt von 0 bis 1 J/g.

Amorphe Polyamide besitzen auf Grund ihrer Amorphizität keinen Schmelzpunkt.

Die Lichttransmission der amorphen oder mikrokristallinen Polyamide gemessen nach ASTM D 1003-13 (2013) an Platten mit einer Dicke von 2 mm beträgt mindestens 75 %, bevorzugt mindestens 80 %, besonders bevorzugt mindestens 90 %.

### Dimere Fettsäure

Im Sinne der vorliegenden Erfindung weisen dimere Fettsäuren (b) zumindest 28 Kohlenstoffatome (C-Atome) auf. Sie werden durch Dimerisierung ungesättigter Monocarbonsäuren zu Dicarbonsäuren gewonnen, wobei die Dimerisierung bevorzugt katalytisch durchgeführt wird. Dimere Fettsäuren gemäß vorliegender Erfindung sind Dicarbonsäuren.

### Aliphatische Dicarbonsäure

Unter den aliphatischen Dicarbonsäuren (d) im Sinne vorliegender Erfindung werden Dicarbonsäuren mit 6 bis

22 Kohlenstoffatomen verstanden. Diese können linear, verzweigt oder cycloaliphatisch sein und liegen in gesättigter Form vor.

Mengenangaben der Monomere

Die erfindungsgemässen Copolyamide enthalten nur Dicarbonsäuren und Diamine. Deren molare Mengen ergänzen sich auf 50 Mol-% für die Summe aller Diamine und 50 Mol-% für die Summe aller Dicarbonsäuren und die Summe der Diamin- und Dicarbonsäure-Mengen ergibt 100 Mol-% für das Copolyamid.

Bei den Mengenangaben zu den Dicarbonsäuren und Diaminen der Copolyamide gilt, dass die Summe der molaren Mengen aller Diamine im Wesentlichen gleich der Summe der molaren Mengen aller Dicarbonsäuren ist. Im Wesentlichen gleich bedeutet dabei einen maximalen Überschuss der Dicarbonsäuren oder der Diamine von 3 %, d.h. das molare Verhältnis von Dicarbonsäuren zu Diaminen beträgt 1,03 : 1 bis 1 : 1,03. Bevorzugt ist ein maximaler Überschuss der Dicarbonsäuren oder der Diamine von 2 %, d.h. das molare Verhältnis von Dicarbonsäuren zu Diaminen beträgt 1,02 : 1 bis 1 : 1,02.

Der Überschuss dient zum Ausgleich von Verlusten an Monomer und/oder zur Regelung der relativen Viskosität des Polyamides und somit der Molmasse.

Die Mengenangaben bezüglich der Monomere sind dabei so zu verstehen, dass sich ein entsprechendes Molverhältnis dieser bei der Polykondensation eingesetzten Monomere auch in den derart durch Polykondensation hergestellten Copolyamiden wiederfindet.

Allgemeines zu Mengenangaben

Die Formmassen gemäß der vorliegenden Erfindung enthalten bevorzugt nur die Komponenten (A), (B) und (C), es gilt dabei die Maßgabe, dass sich die Komponenten (A), (B) und (C) in Summe auf 100 Gew.-% ergänzen. Die festgelegten Bereiche der Mengenangaben für die einzelnen Komponenten (A), (B) und (C) sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller Komponenten (A) bis (C) 100 Gew.-% ergibt.

Die Mengenangaben der im Copolyamid (A) enthaltenen Diamine und Dicarbonsäuren addieren sich jeweils zu 50 Mol-%. Alle im Copolyamid (A) enthaltenen Monomere ergänzen sich in Summe auf 100 Mol-%. Die festgelegten Bereiche der Mengenangaben für die einzelnen Monomere sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller im Copolyamid (A) enthaltenen Monomeren 100 Mol-% ergibt.

Formmasse

Die Formmasse gemäß der vorliegenden Erfindung basiert auf dem Copolyamid (A) und enthält dieses bevorzugt zu mindestens 70 Gew.-%, besonders bevorzugt zu mindestens 80 Gew.-% und insbesondere bevorzugt zu mindestens 88 Gew.-%.

Zähigkeit

Im Sinne der vorliegenden Erfindung wird die Zähigkeit anhand der Reißdehnung, Schlagzähigkeit und/oder Kerbschlagzähigkeit beurteilt.

Transluzenz

Im Sinne der vorliegenden Erfindung wird unter einer transluzenten Formmasse eine Formmasse verstanden, die eine Lichttransmission zwischen 40 und 75 %, gemessen an 2 mm dicken Platten nach ASTM D 1003-13 (2013) aufweist.

Opak

Im Sinne der vorliegenden Erfindung wird unter einer opaken Formmasse eine Formmasse verstanden, die eine Lichttransmission von maximal 40 %, gemessen an 2 mm dicken Platten nach ASTM D 1003-13 (2013) aufweist.

Dielektrischer Verlustfaktor

Im Sinne der vorliegenden Erfindung wird unter dem "dielektrische Verlustfaktor" (= tan $\delta$) der komplexen

relativen Permittivität (= $\underline{\varepsilon}_r$) ein Maß für die Energie verstanden, die in einem Material, das sich in einem elektrischen Wechselfeld befindet, in Wärme umgewandelt wird und damit dem Feld verloren geht.

Der "dielektrische Verlustfaktor" (= tan δ) der komplexen relativen Permittivität ($\underline{\varepsilon}_r$) ist nach IEC 60250-1 (1969) definiert als

$$\tan \delta = \varepsilon_r'' / \varepsilon_r'$$

und die komplexe relative Permittivität ($\underline{\varepsilon}_r$) als

$$\underline{\varepsilon}_r = \varepsilon_r' - j\, \varepsilon_r''.$$

Dabei steht $\varepsilon_r''$ für den Imaginärteil der komplexen relativen Permittivität $\varepsilon_r$, $\varepsilon_r'$ für den Realteil der komplexen relativen Permittivität $\varepsilon_r$ und j für die imaginäre Einheit.

Copolyamid (A)

In den folgenden bevorzugten Ausführungsformen der vorliegenden Erfindung wird das amorphe oder mikrokristalline Copolyamid näher präzisiert. Diese Ausführungsformen sind auch für die erfindungsgemäße Formmasse, den erfindungsgemäßen Formkörper und die erfindungsgemäßen Verwendungen bevorzugt.

Das mindestens eine amorphe oder mikrokristalline Copolyamid (A) enthält zumindest die folgenden Monomere:

(a) mindestens ein cycloaliphatisches Diamin;

(b) 0,25 bis 4,4 Mol-% mindestens einer dimeren Fettsäure; und

(c) 12 bis 49,75 Mol-% aromatisch Dicarbonsäuren ausgewählt aus der Gruppe bestehend aus Isophthalsäure, Terephthalsäure und Naphthalindicarbonsäure, wobei der Anteil an Isophthalsäure 7 bis 44 Mol-% beträgt; und

(d) 0 bis 37,75 Mol-% mindestens einer aliphatischen Dicarbonsäure.

Die mindestens eine cycloaliphatischen Diaminkomponente (a) ist gemäß einer bevorzugten Ausführungsform vorliegender Erfindung ausgewählt aus der Gruppe bestehend aus Bis-(4-amino-3-methyl-cyclohexyl)-methan, Bis-(4-amino-cyclohexyl)-methan, Bis-(4-amino-3-ethyl-cyclohexyl)-methan, Bis-(4-amino-3,5-dimethyl-cyclohexyl)-methan, 2,6-Norbornandiamin oder 2,6-Bis-(aminomethyl)-norbornan, 1,3-Diaminocyclohexan, 1,4-Diaminocyclohexan, Isophorondiamin, 1,3-Bis-(aminomethyl)cyclohexan, 1,4-Bis-(aminomethyl)cyclohexan, 2,2-(4,4'-Diaminodicyclohexyl)propan und Mischungen daraus.

Gemäß einer bevorzugten Ausführungsform der vorliegenden Erfindung ist das cycloaliphatische Diamin (a) mit 40 bis 50 Mol-%, bevorzugt mit 48 bis 50 Mol-% und insbesondere bevorzugt mit genau 50 Mol-% im mindestens einen amorphen oder mikrokristallinen Copolyamid (A) enthalten.

Sofern weniger als 50 Mol-% cycloaliphatisches Diamin im Copolyamid (A) enthalten sind, wird der Diaminanteil mit 0 bis 10 Mol-% und bevorzugt mit 0 bis 2 Mol-% mindestens eines unverzweigten oder verzweigten linear aliphatischen Diamins e) auf 50 Mol-% ergänzt.

Bevorzugt ist das Copolyamid (A) amorph.

Die dimere Fettsäure (b) ist gemäß einer bevorzugten Ausführungsform der vorliegenden Erfindung eine dimeren Fettsäure mit 36 oder 44 C-Atomen, wobei die dimere Fettsäure (b) besonders bevorzugt 36 C-Atome aufweist.

Gemäß einer bevorzugten Ausführungsform der vorliegenden Erfindung ist die dimere Fettsäure (b) mit 1 bis 4,2 Mol-%, bevorzugt mit 1,5 bis 3,5 Mol-% und insbesondere bevorzugt mit 1,7 bis 3,0 Mol-% im mindestens einen amorphen oder mikrokristallinen Copolyamid (A) enthalten.

Die dimere Fettsäure (b) des erfindungsgemäßen Copolyamids (A) weist bevorzugt eine Säurezahl im Bereich von 145-210 mg KOH/g, insbesondere bevorzugt im Bereich von 192-200 mg KOH/g auf. Ihr Gehalt an monofunktioneller Säure beträgt maximal 5 %, an bifunktioneller Säure mindestens 88 % und an trifunktioneller Säure maximal 4 %. Die Säurezahl bzw. der Gehalt der den verschiedenen Säuren wird gemessen nach AOCS Te 1a-64 bzw. AOCS Tf 5-91. In Frage kommen beispielsweise Produkte, mit 36 Kohlenstoffatomen (C-Atomen) wie sie unter dem Markennamen Pripol von Croda insbesondere Pripol 1013, 1012, 1009, 1006 oder unter dem Markennamen Empol von Cognis insbesondere Empol 1012, 1016, oder 1062 oder unter dem Markennamen Radiacid 0975 von Oleon erhältlich sind, oder Produkte mit 44 Kohlenstoffatomen beispielsweise Pripol 1004 von Croda.

Bevorzugt ist die dimere Fettsäure (b) des erfindungsgemäßen Copolyamids (A) teilweise gesättigt, besonders bevorzugt ist sie vollständig gesättigt.

Die mindestens eine aromatische Dicarbonsäure (c) ist gemäß einer bevorzugten Ausführungsform vorliegender Erfindung ausgewählt aus der Gruppe bestehend aus Isophthalsäure, Terephthalsäure und Mischungen daraus.

Gemäß einer bevorzugten Ausführungsform der vorliegenden Erfindung ist die mindestens eine aromatische Dicarbonsäure (c) mit 14 bis 44 Mol-%, bevorzugt mit 23 bis 38,5 Mol-% und besonders bevorzugt mit 25,5 bis 33 Mol-% im mindestens einen amorphen oder mikrokristallinen Copolyamid (A) enthalten.

Nach einer anderen bevorzugten Ausführungsform der vorliegenden Erfindung beträgt der Anteil an Isophthalsäure bezogen auf die Summe aller Monomere im Copolyamid (A) 11,5 bis 27 Mol-% und bevorzugt 12,75 bis 20,55 Mol-%.

Nach einer weiteren bevorzugten Ausführungsform der vorliegenden Erfindung beträgt der Anteil an Terephthalsäure bezogen auf die Summe aller Monomere im Copolyamid (A) 0 bis 22 Mol-%, bevorzugt 11,5 bis 19,25 Mol-% und besonders bevorzugt 12,75 bis 16,65 Mol-%.

Nach einer anderen bevorzugten Ausführungsform der vorliegenden Erfindung beträgt der Anteil an Isophthalsäure bezogen auf die Summe aller Monomere im Copolyamid (A) 11,5 bis 27 Mol-% und bevorzugt 12,75 bis 20,55 und der Anteil an Terephthalsäure bezogen auf die Summe aller Monomere im Copolyamid (A) 0 bis 22 Mol-%, bevorzugt 11,5 bis 19,25 Mol-% und besonders bevorzugt 12,75 bis 16,65 Mol-%.

Nach einer anderen bevorzugten Ausführungsform vorliegender Erfindung ist die mindestens eine aliphatische Dicarbonsäure (d) ausgewählt aus der Gruppe bestehend aus 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,18-Octadecandisäure, 1,3-Cyclohexandicarbonsäure, 1,4-Cyclohexandicarbonsäure und Mischungen daraus.

Gemäß einer bevorzugten Ausführungsform der vorliegenden Erfindung ist die mindestens eine aliphatische Dicarbonsäure (d) mit 5 bis 35 Mol-%, bevorzugt mit 10 bis 25,5 Mol-% und insbesondere bevorzugt mit 15 bis 22,8 Mol-% im mindestens einen amorphen oder mikrokristallinen Copolyamid (A) enthalten.

Nach einer weiteren bevorzugten Ausführungsform der vorliegenden Erfindung ist das Copolyamid (A) ausgewählt aus der Gruppe bestehend aus TMDCI/TMDC12/TMDC36, TMDCI/TMDC14/TMDC36, TMDCI/TMDC9/TMDC36, TMDCI/TMDCCHD/TMDC36, TMDCI/TMDC11/TMDC36, TMDCI/TMDC13/TMDC36, TMDCI/TMDC18/TMDC36, TMDCI/TMDCT/TMDC36, TMDCI/TMDC36, TMDCI/TMDCT/TMDC12/TMDC36, TMDCI/TMDCT/TMDC14/TMDC36, TMDCI/TMDCT/TMDC18/TMDC36, TMDCI/TMDCT/TMDC9/TMDC36, TMDCI/TMDCT/TMDCCH D/TMDC36, TMDCI/TMDCT/TMDC12/TMDCCHD/TMDC36 und Mischungen daraus, wobei TMDC ganz oder teilweise durch MACM ersetzt sein kann, und/oder wobei die dimere Fettsäure mit 36 Kohlenstoffatomen ganz oder teilweise durch eine dimere Fettsäure mit 44 Kohlenstoffatomen ersetzt sein kann.

Nach einer besonders bevorzugten Ausführungsform der vorliegenden Erfindung ist das Copolyamid (A) ausgewählt ist aus der Gruppe bestehend aus TMDCI/TMDC12/TMDC36, TMDCI/TMDC14/TMDC36, TMDCI/TMDC18/TMDC36, TMDCI/TMDCT/TMDC36, TMDCI/TMDC36, TMDCI/TMDCT/TMDC12/TMDC36, TMDCI/TMDCT/TMDC14/TMDC36, TMDCI/TMDCT/TMDC18/TMDC36 und Mischungen daraus, wobei TMDC ganz oder teilweise durch MACM ersetzt sein kann, und/oder wobei die dimere Fettsäure mit 36 Kohlenstoffatomen ganz oder teilweise durch eine dimere Fettsäure mit 44 Kohlenstoffatomen ersetzt sein kann.

Nach einer weiteren besonders bevorzugten Ausführungsform der vorliegenden Erfindung ist das Copolyamid (A) ausgewählt ist aus der Gruppe bestehend aus TMDCI/TMDC12/TMDC36, TMDCI/TMDC14/TMDC36, TMDCI/TMDCT/TMDC36, TMDCI/TMDC36, TMDCI/TMDCT/TMDC12/TMDC36, TMDCI/TMDCT/TMDC14/TMDC36 MACMI/MACM12/MACM36, MACMI/MACM14/MACM36, MACMI/MACMT/MACM36, MACMI/MACM36, MACMI/MACMT/MACM12/MACM36, MACMI/MACMT/MACM14/MACM36 und Mischungen daraus.

Eine bevorzugte Ausführungsform vorliegender Erfindung sieht vor, dass die Glasübergangstemperatur des mindestens einen amorphen oder mikrokristallinen Copolyamids (A) mindestens 155 °C, bevorzugt mindestens 170 °C, insbesondere bevorzugt mindestens 180 °C, besonders bevorzugt mindestens 190°C und ganz besonders bevorzugt mindestens 200 °C beträgt, gemessen nach ISO 11357-2 und -3 (2013) an Granulat mit einem Wassergehalt von unter 0,1 Gew.-%.

Gemäß einer weiteren bevorzugten Ausführungsform vorliegender Erfindung beträgt der dielektrische Verlustfaktor tan $\delta$ des mindestens einen amorphen oder mikrokristallinen Copolyamids (A) maximal 8,3 x $10^{-3}$, bevorzugt 8,0 x $10^{-3}$, besonders bevorzugt maximal 7,0 x $10^{-3}$ und insbesondere bevorzugt maximal 6,5 x $10^{-3}$.

Gemäß einer anderen bevorzugten Ausführungsform der vorliegenden Erfindung beträgt die Lichttransmission des mindestens einen amorphen oder mikrokristallinen Copolyamids (A) gemessen nach ASTM D 1003-13 (2013), an einer daraus hergestellten Platte mit einer Dicke von 2 mm, noch mindestens 75 %, bevorzugt mindestens 80 % und besonders bevorzugt mindestens 90 %.

Eine andere bevorzugte Ausführungsform vorliegender Erfindung sieht vor, dass das mindestens eine amorphe oder mikrokristalline Copolyamid (A) zumindest die folgenden Monomere enthält:

(a) mindestens eine cycloaliphatische Diaminkomponente ausgewählt aus der Gruppe bestehend aus Bis-(4-amino-3-methyl-cyclohexyl)-methan, Bis-(4-amino-cyclohexyl)-methan, Bis-(4-amino-3-ethyl-cyclohexyl)-methan, Bis-(4-amino-3,5-dimethyl-cyclohexyl)-methan, 2,6-Norbornandiamin oder 2,6-Bis-(aminomethyl)-norbornan, 1,3-Diaminocyclohexan, 1,4-Diaminocyclohexandiamin, Isophorondiamin, 1,3-Bis-(aminomethyl)cyclohexan, 1,4-Bis-(aminomethyl)cyclohexan, 2,2-(4,4'-Diaminodicyclohexyl)propan und Mischungen daraus; und
(b) mindestens eine dimere Fettsäure ausgewählt aus der Gruppe bestehend aus dimeren Fettsäuren mit 36 oder 44 C-Atomen und Mischungen daraus; und
(c) aromatische Dicarbonsäuren, ausgewählt aus der Gruppe bestehend aus Isophthalsäure, Terephthalsäure, Naphthalindicarbonsäure und Mischungen daraus, wobei der Anteil an Isophthalsäure 7 bis 44 Mol-% beträgt; und
(d) mindestens eine aliphatische Dicarbonsäure ausgewählt aus der Gruppe bestehend aus 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,18-Octadecandisäure, 1,3-Cyclohexandicarbonsäure, 1,4-Cyclohexandicarbonsäure und Mischungen daraus.

Eine andere bevorzugte Ausführungsform vorliegender Erfindung sieht vor, dass das mindestens eine amorphe oder mikrokristalline Copolyamid (A) zumindest die folgenden Monomere enthält:

(a) mindestens eine cycloaliphatische Diaminkomponente ausgewählt aus der Gruppe bestehend aus Bis-(4-amino-3-methyl-cyclohexyl)-methan, Bis-(4-amino-cyclohexyl)-methan, Bis-(4-amino-3,5-dimethyl-cyclohexyl)-methan und Mischungen daraus und bevorzugt ausgewählt ist aus der Gruppe bestehend aus Bis-(4-amino-3-methyl-cyclohexyl)-methan, Bis-(4-amino-3,5-dimethylcyclohexyl)-methan und Mischungen daraus; und
(b) mindestens eine dimeren Fettsäure mit 36 C-Atomen; und
(c) aromatische Dicarbonsäuren, ausgewählt aus der Gruppe bestehend aus Isophthalsäure, Terephthalsäure und Mischungen daraus, wobei der Anteil an Isophthalsäure 7 bis 44 Mol-% beträgt; und gegebenenfalls
(d) mindestens eine aliphatischen Dicarbonsäure ausgewählt aus der Gruppe bestehend aus 1,12-Dodecandisäure,

1,14-Tetradecandisäure, 1,18-Octadecandisäure und Mischungen daraus.

Eine insbesondere bevorzugte Ausführungsform vorliegender Erfindung sieht vor, dass das mindestens eine amorphe oder mikrokristalline Copolyamid (A) zumindest die folgenden Monomere enthält:

(a) 40 bis 50 Mol-%, bevorzugt 48 bis 50 Mol-% und insbesondere bevorzugt genau 50 Mol-% mindestens eines cycloaliphatisches Diamins;
(b) 1 bis 4,2 Mol-% mindestens einer dimeren Fettsäure; und
(c) 14 bis 44 Mol-% aromatische Dicarbonsäuren, ausgewählt aus der Gruppe bestehend aus Isophthalsäure, Terephthalsäure und Naphthalindicarbonsäure, wobei der Anteil an Isophthalsäure 7 bis 44 Mol-% beträgt;
(d) 5 bis 35 Mol-% mindestens einer aliphatischen Dicarbonsäure; wobei sich die Anteile aller im Copolyamid (A) enthaltenen Monomere auf 100 Mol- % ergänzen.

Eine andere insbesondere bevorzugte Ausführungsform vorliegender Erfindung sieht vor, dass das mindestens eine amorphe oder mikrokristalline Copolyamid (A) zumindest die folgenden Monomere enthält:

(a) 40 bis 50 Mol-%, bevorzugt 48 bis 50 Mol-% und insbesondere bevorzugt genau 50 Mol-% mindestens eines cycloaliphatischen Diamins;
(b) 1,5 bis 3,5 Mol-% mindestens einer dimeren Fettsäure; und
(c) 23 bis 38,5 Mol-% aromatische Dicarbonsäuren, ausgewählt aus der Gruppe bestehend aus Isophthalsäure, Terephthalsäure und Naphthalindicarbonsäure, wobei der Anteil an Isophthalsäure 7 bis 44 Mol-% beträgt;
(d) 10 bis 25,5 Mol-% mindestens einer aliphatischen Dicarbonsäure; wobei

sich die Anteile aller im Copolyamid (A) enthaltenen Monomere auf 100 Mol- % ergänzen.

Eine andere insbesondere bevorzugte Ausführungsform vorliegender Erfindung sieht vor, dass das mindestens eine amorphe oder mikrokristalline Copolyamid (A) zumindest die folgenden Monomere enthält:

(e) 40 bis 50 Mol-%, bevorzugt 48 bis 50 Mol-% und insbesondere bevorzugt genau 50 Mol-% mindestens eines cycloaliphatischen Diamins;
(f) 1,7 bis 3,0 Mol-% mindestens einer dimeren Fettsäure; und
(g) 25,5 bis 33,3 Mol-% aromatische Dicarbonsäuren, ausgewählt aus der Gruppe bestehend aus Isophthalsäure, Terephthalsäure und Naphthalindicarbonsäure, wobei der Anteil an Isophthalsäure 7 bis 44 Mol-% beträgt,;
(h) 15 bis 22,8 Mol-% mindestens einer aliphatischen Dicarbonsäure; wobei sich die Anteile aller im Copolyamid

(A) enthaltenen Monomere auf 100 Mol-% ergänzen.

Nach einer Ausführungsform enthält das Copolyamid keine Monomere außer den Monomeren (a) bis (e).

Die relative Viskosität der amorphen oder mikrokristallinen Copolyamide (A) beträgt in einer bevorzugten Ausführungsform vorliegender Erfindung 1,40 bis 2,15, bevorzugt 1,45 bis 1,90, besonders bevorzugt 1,50 bis 1,80, gemessen an einer Lösung von 0,5 g Polyamid in 100 ml m-Kresol bei 20°C.

Formmasse und Formkörper daraus

Die Formmasse gemäß der vorliegenden Erfindung kann neben dem Copolyamid (A) auch noch Zusatzstoffe (B) und weitere Polymere (C), die verschieden vom Copolyamid (A) und vom Zusatzstoff (B) sind, enthalten.

Gemäß einer weiteren bevorzugten Ausführungsform der vorliegenden Erfindung sind die Zusatzstoffe (B) ausgewählt aus der Gruppe bestehend aus anorganischen und organischen Stabilisatoren, insbesondere Antioxidantien, Antiozonantien und Lichtschutzmitteln, Kondensationskatalysatoren, Kettenreglern, Gleitmitteln, Entformungsmitteln, Trennmitteln, kettenverlängernden Additiven, Farbstoffen, Markierungsmitteln, anorganischen Pigmenten, organischen Pigmenten, Entformungsmitteln, optischen Aufhellern, natürlichen Schichtsilikaten, synthetischen Schichtsilikaten, nanoskaligen Füllstoffen mit einer Partikelgröße von maximal 100 nm.

Gemäß einer weiteren bevorzugten Ausführungsform der vorliegenden Erfindung sind die Polymere (C) bevorzugt ausgewählt aus der Gruppe bestehend aus PA 66, PA 69, PA 610, PA 612, PA 614, PA 1010, PA 1212, PA 1012, PA 1210, PA 6/12, PA 11, PA 12, Polyetheramiden, Polyetheresteramiden, Polyarylethern, amorphen Polyamiden, Schlagzähmodifikatoren und Cycloolefin-Copolymeren.

Besonders bevorzugte ist das Polymer (C) ausgewählt aus der Gruppe bestehend aus PA 66, PA 612, PA 1010, PA 11, PA 12, Polyarylethern, amorphen Polyamiden, Schlagzähmodifikatoren und Cycloolefin-Copolymere.

Bei mikrowellenbeständigen Formkörpern können die übrigen Teile der Formmasse (maximal 10 Gew.-%) ganz generell aus beliebigen mikrowellenbeständigen Materialien bestehen. Bevorzugt sind Polyamid 1010, Polyamid 11, Polyamid 12, Schlagzähmodifikatoren und/oder Cycloolefin-Copolymere.

Die mikrowellenbeständigen Formkörper sind insbesondere ausgewählt aus der Gruppe bestehend aus Gegenständen wie Geschirr, Behälter, Dosen, Schalen, Töpfe, Tassen, Becher, Teller, Deckel, Saucieren, Kannen oder Abdeck-, Unterleg- oder Vorlageplatten für Haushalt, Gastronomie, Labor und/oder Industrie.

Eine weitere Ausführungsform der vorliegenden Erfindung sieht vor, dass der mikrowellenbeständige Formkörper eine Wandstärke im Bereich von 0,05 bis 5,0 mm, bevorzugt 0,1 bis 4,5 mm und besonders bevorzugt 1,0 bis 4,0 mm aufweist.

Eine bevorzugte Formmasse gemäß der vorliegenden Erfindung weist die folgende Zusammensetzung auf:

70 bis 100 Gew.-%, bevorzugt 80 bis 99,99 Gew.-% und besonders bevorzugt 88,0 bis 99,8 Gew.-% Copolyamid (A), und
0 bis 10 Gew.-%, bevorzugt 0,01 bis 5 Gew.-% und besonders bevorzugt 0,1 bis 2,0 Gew.-% Zusatzstoff (B), und
0 bis 20 Gew.-%, bevorzugt 0 bis 15 Gew.-% und besonders bevorzugt 0,1 bis 10 Gew.-% Polymer (C),
wobei sich die Komponenten (A) bis (C) auf 100 Gew.-% ergänzen.

Gemäß einer anderen bevorzugten Ausführungsform der vorliegenden Erfindung beträgt die Lichttransmission der mindestens einen Formmasse gemessen nach ASTM D 1003-13 (2013), an einer daraus hergestellten Platte mit einer Dicke von 2 mm, noch mindestens 75 %, bevorzugt mindestens 80 % und besonders bevorzugt mindestens 90 %.

Die erfindungsgemäße Formmasse ist aber nicht zwingend transparent. Abhängig von den darin enthaltenen Zusatzstoffen (B) und dem weiteren Polymer (C) kann die Formmasse auch transluzent oder opak sein. Bevorzugt ist die erfindungsgemäße Formmasse transparent oder transluzent.

Eine bevorzugte Ausführungsform vorliegender Erfindung sieht vor, dass die Glasübergangstemperatur der mindestens einen Formmasse mindestens 155°C, bevorzugt mindestens 170 °C, insbesondere bevorzugt mindestens 180 °C und besonders bevorzugt mindestens 190 °C und ganz besonders bevorzugt mindestens 200 °C beträgt, gemessen nach ISO 11357-2 und -3 (2013) an Granulat mit einem Wassergehalt von unter 0,1 Gew.-%.

Gemäß einer weiteren bevorzugten Ausführungsform vorliegender Erfindung beträgt der dielektrische Verlustfaktor tan $\delta$ der mindestens einen Formmasse maximal $8,3 \times 10^{-3}$, bevorzugt maximal $8,0 \times 10^{-3}$, insbesondere bevorzugt maximal $7,0 \times 10^{-3}$ und besonders bevorzugt maximal $6,5 \times 10^{-3}$.

Gemäß einer anderen bevorzugten Ausführungsform der vorliegenden Erfindung weisen Formkörper aus den amorphen oder mikrokristallinen Copolyamiden (A) sehr gute mechanische Eigenschaften, insbesondere hohe Schlagzähigkeiten auf. Die nach ISO 179/2 bei 23°C bestimmte Kerbschlagzähigkeit liegt bevorzugt bei > 6 kJ/$m^2$, besonders bevorzugt bei > 8 kJ/$m^2$, insbesondere bevorzugt bei > 10 kJ/ $m^2$. Die nach ISO 179/2 bei 23°C bestimmte Schlagzähigkeit liegt bevorzugt bei > 130 kJ/$m^2$, besonders bevorzugt bei > 250 kJ/$m^2$, insbesondere bevorzugt bei > 300 kJ/ $m^2$.

Verwendungen der Formmassen und der Formkörper

Die Erfindung betrifft weiterhin Verwendungen der Formmassen enthaltend das mindestens eine amorphes oder mikrokristallines Copolyamid (A) und gegebenenfalls Zusatzstoffe (B) und gegebenenfalls ein weiteres Polymer (C), welches vom Copolyamid (A) und dem Zusatzstoff (B) verschieden ist.

Die Formmasse weist dabei die Merkmale wie oben angegeben auf.

Eine bevorzugte Verwendung der erfindungsgemäßen Formmasse besteht in der Verwendung zur Herstellung von Formkörpern.

Eine andere bevorzugte Ausführungsform vorliegender Erfindung betrifft die Verwendung der Formkörper im Bereich Automobil, Elektro, Elektronik, Haushalt, Gastronomie, Labor, Sport, Freizeit, Spielzeug, Dekor, Verpackung, Optik, Maschinenbau oder Mess-, Regelungs- und Steuertechnik.

Allgemeine Vorschrift zur Herstellung der amorphen oder mikrokristallinen Copolyamide

Die Herstellung der amorphen oder mikrokristallinen Copolyamide erfolgt auf an sich bekannte Weise zum Beispiel in handelsüblichen, rührbaren Druckautoklaven mit einem Vorlagegefäß und einem Reaktionsgefäß.

Im Vorlagegefäß wird deionisiertes Wasser vorgelegt und die Monomere und etwaige Zusatzstoffe zugegeben. Danach wird mehrfach mit Stickstoffgas inertisiert. Unter Rühren wird auf 180 bis 230 °C unter dem sich einstellenden Druck aufgeheizt, um eine homogene Lösung zu erhalten. Diese Lösung wird durch ein Sieb in das Reaktionsgefäß gepumpt und dort auf die gewünschte Reaktionstemperatur von 260 bis 330 °C bei einem Druck von maximal 30 bar aufgeheizt. Der Ansatz wird in der Druckphase für 2 bis 4 Stunden auf der Reaktionstemperatur gehalten. In der anschließenden Entspannungsphase wird der Druck innerhalb von 1 bis 2 Stunden auf atmosphärischen Druck reduziert, wobei die Temperatur leicht sinken kann. In der folgenden Entgasungsphase wird der Ansatz bei atmosphärischem Druck für 0,5 bis 2,5 Stunden auf einer Temperatur von 270 bis 330 °C gehalten. Die Polymerschmelze wird in Strangform ausgetragen, im Wasserbad bei 15 bis 80 °C abgekühlt und granuliert. Das Granulat wird bei 80 bis 120 °C unter Stickstoff oder im Vakuum auf einen Wassergehalt von weniger als 0,1 Gew.-% getrocknet.

Geeignete Katalysatoren zur Beschleunigung der Polykondensationsreaktion sind phosphorhaltige Säuren wie beispielsweise $H_3PO_2$, $H_3PO_3$, $H_3PO_4$, deren Salze oder organischen Derivate. Die Katalysatoren werden im Bereich von 0,01 bis 0,5 Gew.-%, bevorzugt 0,03 bis 0,1 Gew.-%, bezogen auf das Polyamid, zugegeben.

Geeignete Entschäumer zur Vermeidung der Schaumbildung während der Entgasung sind wässrige, 10 %-ige Emulsionen, die Silicone oder Siliconderivate enthalten und in Mengen von 0,01 bis 1,0 Gew.-%, bevorzugt 0,01 bis 0,10 Gew.-%, bezogen auf das Polyamid, eingesetzt werden.

Die Einstellung der relativen Viskosität und damit der Molmasse kann in an sich bekannter Weise, z.B. über monofunktionelle Amine oder Carbonsäuren, und/oder difunktionelle Diamine oder Dicarbonsäuren als Kettenregler erfolgen. Bevorzugte monofunktionelle Kettenregler für die erfindungsgemäßen Copolyamide sind Benzoesäure, Essigsäure, Propionsäure, Buttersäure, Valeriansäure, Capronsäure, Laurinsäure, Stearinsäure, 2-Ethylhexansäure, Cyclohexansäure, Propylamin, Butylamin, Pentylamin, Hexylamin, 2-Ethylhexylamin, n-Octylamin, n-Nonylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, Anilin oder Triacetondiamin. Die Kettenregler können einzeln oder in Kombination verwendet werden. Es können auch andere monofunktionelle Verbindungen als Kettenregler eingesetzt werden, die mit einer Amino- oder Säuregruppe reagieren können wie Anhydride, Isocyanate, Säurehalogenide, Amide oder Ester. Die übliche Einsatzmenge der monofunktionellen Kettenregler liegt bei 5 bis 200 mmol pro kg Copolyamid.

Die Glasübergangstemperatur (Tg) der amorphen oder mikrokristallinen Copolyamide (A) beträgt mindestens 155 °C, bevorzugt 170 bis 235 °C, insbesondere bevorzugt 180 bis 230 °C, besonders bevorzugt 190 bis 225 °C und ganz besonders bevorzugt 200 bis 220 °C, gemessen nach ISO 11357-2 und -3 (2013) an Granulat mit einem Wassergehalt von unter 0,1 Gew.-%.

Herstellung der mikrowellenbeständigen Formkörper

Die mikrowellenbeständigen Formkörper können über die gängigen Verarbeitungstechniken für Polyamid-Formmassen hergestellt werden. Besonders bevorzugt ist die Verarbeitung über Spritzgusstechniken.

Die Verarbeitung der amorphen oder mikrokristallinen Copolyamide im Spritzguss erfolgt auf herkömmlichen Spritzgussmaschinen mit einer Standard-3-Zonen-Schnecke bei Zylindertemperaturen von 250 bis 330 °C, wobei für den Einzug auch eine Temperatur unter 100 °C gewählt und ein vom Einzug zur Düse hin auf- und absteigendes Temperaturprofil verwendet werden kann. Die Werkzeugtemperatur wird auf 120 bis 180 °C, bevorzugt 140 bis 170 °C eingestellt.

Anhand der nachfolgenden Beispiele soll der erfindungsgemäße Gegenstand näher erläutert werden, ohne

diesen auf die hier gezeigten spezifischen Ausführungsformen einschränken zu wollen.

## 1 **Messmethoden**

Im Rahmen dieser Anmeldung wurden die folgenden Messmethoden verwendet:

Relative Viskosität

Die relative Viskosität wurde gemäß ISO 307 (2007) bei 20 °C bestimmt. Dazu wurden 0,5 g Polymergranulat in 100 ml m-Kresol eingewogen, die Berechnung der relativen Viskosität (RV) nach RV = $t/t_0$ erfolgte in Anlehnung an Abschnitt 11 der Norm.

Glasübergangstemperatur (Tg)

Die Bestimmung der Glasübergangstemperatur erfolgte nach ISO 11357-2 und -3 (2013) an Granulat mit einem Wassergehalt von unter 0,1 Gew.-%. Die Differential Scanning Calorimetry (DSC) wurde bei jeder der beiden Aufheizungen mit einer Aufheizrate von 20 K/min durchgeführt. Nach der ersten Aufheizung wurde die Probe in Trockeneis abgeschreckt. Die Glasübergangstemperatur (Tg) wurde bei der zweiten Aufheizung bestimmt. Der Mittelpunkt des Glasübergangsbereichs, welcher als Glasübergangstemperatur (Tg) angegeben wurde, wurde nach der Methode "Half Height" ermittelt.

Zug-E-Modul

ISO 527 mit einer Zuggeschwindigkeit von 1 mm/min ISO-Zugstab, Norm: ISO/CD 3167, Typ A1, 170 x 20/10 x 4 mm, Temperatur 23°C

Reißfestigkeit und Reißdehnung

Die Bestimmung von Reißfestigkeit und Reißdehnung wurden gemäß ISO 527 bei 23°C mit einer Zuggeschwindigkeit von 5 mm/min bei verstärkten Materialien an einem ISO-Zugstab, Typ A1 (Masse 170 x 20/10 x 4 mm), hergestellt gemäß der Norm ISO/CD 3167, durchgeführt.

Schlagzähigkeit nach Charpy

Die Bestimmung der Schlagzähigkeit nach Charpy wurde gemäß ISO 179/2*eU (* 2 = instrumentiert) bei 23°C an einem ISO-Prüfstab, Typ B1 (Masse 80 x 10 x 4 mm), hergestellt gemäß der Norm ISO/CD 3167, durchgeführt.

Kerbschlagzähigkeit nach Charpy

Die Bestimmung der Kerbschlagzähigkeit nach Charpy wurde gemäß ISO 179/2*eA (* 2 = instrumentiert) bei 23°C an einem ISO-Prüfstab, Typ B1 (Masse 80 x 10 x 4 mm), hergestellt gemäß der Norm ISO/CD 3167, durchgeführt.

Lichttransmission

Die Lichttransmission wurde bei 23 °C gemäß der ASTM D 1003-13 (2013) an 60 x 60 mm Platten (Breite x Länge) mit 2 mm Dicke und Filmanguss auf einem "Haze Gard plus" der Firma Byk Gardner mit CIE Lichtart C ermittelt. Der Lichttransmissionswert wurde in % der eingestrahlten Lichtmenge angegeben.

Dielektrischer Verlustfaktor

Die Messung des dielektrischen Verlustfaktors tan $\delta$ erfolgt nach IEC 61189-2-721 (2015) an 80 x 80 x 3 mm Platten mit Filmanguss mit einem Split Post Dielectric Resonator (SPDR) der Firma QWED, Polen und der Treibersoftware Microwave Q-Meter 1.5.11 (Broschüre, inklusive Informationen zur Messung erhältlich unter www.qwed.eu). Die Messfrequenz beträgt 2,45 GHz, die Messtemperatur 23 °C.

Mikrowellenofentest

Der Mikrowellenofentest wurde an Reisschalen durchgeführt, deren Herstellung unter Punkt 3.2 beschreiben

wird. Diese Reisschalen wurden 14 Tage bei 95 °C in Wasser gelagert, direkt vor dem Test entnommen, mit einem Baumwolltuch abgetrocknet und ungefüllt in der Mitte der Bodenfläche des Garraums eines Mikrowellenofens platziert. Als Mikrowellenofen wurde die Gewerbe-Mikrowelle Samsung CM1919A verwendet, welche ohne Drehteller auskommt. Die Maximalleistung des Geräts beträgt 1850 Watt. Die Betriebsfrequenz liegt bei 2,45 GHz. Der Garraum weist die Dimension 370 x 370 x 190 mm (Breite x Tiefe x Höhe) auf. Der Mikrowellenofen wurde nach dem Schließen der Tür unverzüglich gestartet, wobei die maximale Leistung von 1850 Watt verwendet wurde.

Nach Ablauf von 120 Sekunden wurde die Reisschale entnommen und visuell auf Beschädigungen wie Verzug, angeschmolzene Stellen oder Bläschenbildung, sogenannte Blistern geprüft. Es wurden jeweils fünf Schalen geprüft, trat bei nur einer der Schalen eine Beschädigung auf, wurde der Test als nicht bestanden bewertet.

Von Reisschalen aus Materialien die den 120 s Mikrowellenofen-Test bestanden haben, wurden für ausgewählte Beispiele oder Vergleichsbeispiele weitere 5 Schalen getestet, wobei die Zeit gemessen wurde bis die ersten Beschädigungen wie Verzug, angeschmolzene Stellen oder Bläschenbildung, sogenannte Blistern durch die Sichtscheibe des Mikrowellenofens erkennbar war. Angegeben wurde der arithmetische Mittelwert aus den 5 gemessenen Zeiten.

2 Ausgangsmaterialien

Tabelle 1: In den Beispielen und Vergleichsspielen verwendete Monomere.

| Monomer | CAS-Nr. | Schmelzbereich [°C] | Handelsname | Hersteller / Lieferant |
|---|---|---|---|---|
| Bis(4-amino-3,5-dimethylcyclohexyl)-methan | 65962-45-0 | - | - | BASF SE, Deutschland |
| Bis(4-amino-3-methylcyclohexyl)-methan | 6864-37-5 | - 7 bis - 0.6* | Laromin C260 | BASF SE, Deutschland |
| dimere Fettsäure C36 | 68783-41-5 | - | Radiacid 0975 | OLEON N.V., Belgien |
| Terephthalsäure | 100-21-0 | > 400 | - | GMS - Chemie-Handelsges.m.b.H., Deutschland |
| Isophthalsäure | 121-91-5 | 345 bis 348 | - | Flint Hills Resources, Schweiz |
| 1,9-Nonandisäure | 123-99-9 | 101 bis 102 | - | Emery Oleochemicals GmbH, Deutschland |
| 1,11-Undecandisäure | 1852-04-6 | 113 bis 114 | - | Cathay Biotechnology Ltd., China |
| 1,12-Dodecandisäure | 693-23-2 | 128 bis 130 | - | Cathay Biotechnology Ltd., China |
| 1,13-Tridecandisäure | 505-52-2 | 113 bis 116 | - | Cathay Biotechnology Ltd., China |
| 1,4-Cyclohexandicarbonsäure | 1076-97-7 | 163 bis 169 | - | Eastman Chemicals Company, USA |
| * Gefrierbereich nach ASTM D1015-55. | | | | |

**3 Beispiele und Vergleichsbeispiele**

**3.1 Herstellung des Copolyamids gemäß Beispiel 4**

Im Folgenden wird die Herstellung eines erfindungsgemäßen Copolyamids an Hand des im Beispiel 4, verwendeten PATMDCI / TMDCT / TMDC12 / TMDC36 erläutert:

Im Vorlagegefäss eines 300 l Druckautoklaven wurden 30 kg deionisiertes Wasser vorgelegt und 6,82 kg Isophthalsäure, 6,82 kg Terephthalsäure, 13,51 kg 1,12-Dodecandisäure und 3,30 kg dimere Fettsäure (Radiacid 0975 mit 36 C-Atomen) eingerührt. Danach wurden 39,54 kg Bis(4-amino-3,5-dimethylcyclohexyl)methan (TMDC), 20 g

Antifoam RD 10 Gew.-% Emulsion als Entschäumer und zum Schluss 80 g Benzoesäure als Kettenregler zugegeben. Daraufhin wurde wie folgt verfahren:

- Nach 10-mallger Inertisierung wurde bis auf 210 °C aufgeheizt. Die homogene Lösung wurde bei 210 °C durch ein Sieb in das Reaktionsgefäß gepumpt.
- Unter Rühren wurde dort der Ansatz auf 300 °C aufgeheizt und 5 Stunden bei 20 bar in der Druckphase gehalten. Innerhalb von 1,5 Stunden wurde auf atmosphärischen Druck entspannt und anschließend bei 300 °C für 1 Stunde entgast.
- Die Polymerschmelze wurde ausgetragen, im Wasserbad (20 °C) abgekühlt und granuliert. Das Granulat wurde bei 100 °C im Vakuum (30 mbar) auf einen Wassergehalt von unter 0,1 Gew.-% getrocknet.

Die relative Viskosität des Produkts betrug 1,53, die Glasübergangstemperatur 212 °C und die Lichttransmission bei 2 mm 92,9 %.

### 3.2 Herstellung der Prüfkörper

Reisschalen

Die Reisschalen wurden auf einer Spritzgussmaschine der Firma Ferromatik Milacron, Typ K85D-S/2F mit einer 40 mm Standard-3-Zonen-Schnecke hergestellt. Dabei wurden aufsteigende Zylindertemperaturen von 280 bis 320 °C und eine Einzugstemperatur von 40 °C eingestellt Die Werkzeugtemperatur wurde auf 160 °C eingestellt.

Die Dimensionen der rotationssymetrischen Schale (siehe Fig. 1) betragen:

| | |
|---|---|
| Innendurchmesser oben: | 113,2 mm |
| Innendurchmesser unten: | 50 mm |
| Radius: | 125 mm |
| Höhe: | 60 mm |
| Wandstärke: | 3,4 mm |

Platten

Die Platten 80 x 80 x 3 mm mit Filmanguss wurden auf einer Spritzgussmaschine der Firma Arburg, Modell Allrounder 420 C 1000-250 mit einer 25 mm Standard-3-Zonen-Schnecke hergestellt. Dabei wurden vom Einzug zur Düse auf- und absteigende Zylindertemperaturen von 310/320/325/325/315/305 °C verwendet. Die Werkzeugtemperatur wurde auf 160 °C eingestellt.

Die Herstellung der Platten 60 x 60 x 2 mm mit Filmanguss zur Bestimmung der Lichttransmission erfolgte wie oben beschrieben, jedoch wurde ein poliertes Werkzeug verwendet.

Die Platten wurden in trockenem Zustand verwendet; dazu wurden sie nach dem Spritzguss mindestens 48 h bei Raumtemperatur in trockener Umgebung, d.h. über Silicagel gelagert.

### 3.3 Ergebnisse

Die folgende Tabelle 2 zeigt das Beispiell und die Vergleichsbeispiele 2 und 3.

**Tabelle 2:** Beispiel 1 und Vergleichsbeispiele 2 und 3.

| | | **Beispiel** | **Vergleichsbeispiele** | |
|---|---|---|---|---|
| **Monomere** | **Einheit** | **1** | **2** | **3** |
| TMDC | Mol-% | - | 50 | - |
| MACM | Mol-% | 50 | - | 50 |
| dimere Fettsäure C36 | Mol-% | 2 | 9,5 | 9,5 |
| Isopthalsäure | Mol-% | 14 | 40,5 | 40,5 |

(fortgesetzt)

| | | Beispiel | Vergleichsbeispiele | |
|---|---|---|---|---|
| **Monomere** | **Einheit** | **1** | **2** | **3** |
| Terephthalsäure | Mol-% | 14 | - | - |
| 1,12-Dodecandisäure | Mol-% | 20 | - | - |
| **Messwerte** | | | | |
| Abstelldrehmoment* | Nm | 120 | 120 | 120 |
| relative Viskosität (RV)* | - | 1,62 | 1,37 | 1,38 |
| Glasübergangstemperatur | °C | 206 | 206 | 195 |
| Zug-E-Modul | MPa | 2150 | 2380 | 2270 |
| Reißfestigkeit | MPa | 64 | 87 | 70 |
| Reißdehnung | % | 57 | 7 | 14 |
| Schlagzähigkeit Charpy 23 °C | $kJ/m^2$ | 342 | 105 | 312 |
| Kerbschlagzähigkeit Charpy 23 °C | $kJ/m^2$ | 11 | 5 | 5 |
| dielektrischer Verlustfaktor tan $\delta$ | [10^-3] | 8,15 | 4,38 | 6,20 |
| Lichttransmission bei 2 mm | % | 92,8 | 92,8 | 93,3 |
| Mikrowellenofentest*** | 120 s | + | + | + |
| | s | 170 | 222 | 130 |

* Abstelldrehmoment (120 Nm) des Rührwerks
** RV relative Viskosität, gemessen an einer Lösung von 0.5 g Polyamid in 100 ml m-Kresol bei 20 °C
*** + bestanden

Die folgende Tabelle 3 zeigt die Beispiele 4, 6, 9 und 11 sowie die Vergleichsbeispiele 5, 7, 8, 10, 12 und 13.

**Tabelle 3:** Beispiele 4, 6, 9 und 11 sowie Vergleichsbeispiele 5, 7, 8, 10, 12 und 13.

| | Beispiele und Vergleichsbeispiele | | | | | | | | | | |
|---|---|---|---|---|---|---|---|---|---|---|---|
| **Monomere** | **Einheit** | **4** | **5** | **6** | **7** | **8** | **9** | **10** | **11** | **12** | **13** |
| TMDC | Mol-% | 50 | 50 | - | - | - | - | - | - | - | - |
| MACM | Mol-% | - | - | 50 | 50 | 50 | 50 | 50 | 50 | 50 | 50 |
| dimere Fettsäure C36 | Mol-% | 2 | 2 | 2 | 2 | 2 | 2 | 2 | 4 | - | 50 |
| Isopthalsäure | Mol-% | 14 | 28 | 14 | 28 | 28 | 14 | 14 | 14 | 13,5 | - |
| Terephthalsäure | Mol-% | 14 | - | 14 | - | - | 14 | - | 14 | 13,5 | - |
| 1,12-Dodecandisäure | Mol-% | 20 | - | 20 | 20 | - | - | 20 | 18 | 23 | - |
| 1,13-Tridecandisäure | Mol-% | - | 20 | - | - | - | - | - | - | - | - |
| 1,11-Undecandisäure | Mol-% | - | - | - | - | 20 | - | - | - | - | - |
| 1,9-Nonandisäure | Mol-% | - | - | - | - | - | 20 | - | - | - | - |
| 1,4-Cyclohexandicarbonsäure | Mol-% | - | - | - | - | - | - | 14 | - | - | - |
| **Messwerte** | | | | | | | | | | | |
| relative Viskosität (RV)* | - | 1,53 | 1,50 | 1,61 | 1,53 | 1,53 | 1,53 | 1,61 | 1,53 | 1,54 | 1,54 |
| Glasübergangstemperatur | °C | 212 | 206 | 206 | 198 | 201 | 207 | 195 | 195 | 204 | 76 |
| dielektrischer Verlustfaktor tan $\delta$ | $[10^{-3}]$ | 6,45 | 6,67 | 8,15 | 7,98 | 8,15 | 7,93 | 8,11 | 7,75 | 8,54 | 4,50 |

(fortgesetzt)

| Messwerte | | | | | | | | | | | |
|---|---|---|---|---|---|---|---|---|---|---|---|
| Lichttransmission bei 2 mm | % | 92,9 | n.g. | 92,8 | n.g. | n.g. | n.g. | 93,2 | n.g. | 93,3 | 93,1 |
| Mikrowellenofentest** | 120 s | + | + | + | + | + | + | + | + | n.b. | *** |
| | s | n.v. | n.v. | 170 | n.v. | n.v. | n.v. | n.v. | n.v. | - | - |

* RV relative Viskosität, gemessen an einer Lösung von 0.5 g Polyamid in 100 ml m-Kresol bei 20° C; n.g. = nicht gemessen
** + bestanden, n.b. nicht bestanden, n.v. nicht verfügbar (≥ 120s);
*** verformt sich bereits im Konditionierungsschritt (14 Tage bei 95 °C in Wasser).

**4 Diskussion der Ergebnisse**

Für die erfindungsgemäßen Copolyamide der Beispiele 1 und 4, 6, 9 und 11 gemäß der Tabellen 2 und 3, die einen Gehalt an dimerer Fettsäure von 2 bzw. 4 Gew.-% aufweisen, konnten durchweg deutlich höhere relative Viskositäten erzielt werden als für die Copolyamide der Vergleichsbeispiele 2 und 3 der Tabelle 2 mit einem höheren Gehalt an dimerer Fettsäure von 9,5 Gew.-%.

Bei der Herstellung des Copolyamids gemäß Beispiel 1 wurde das Abstelldrehmoment von 120 Nm erreicht und eine relative Viskosität von 1,62 realisiert. Die Copolyamide der Vergleichsbeispiele 2 und 3 erreichten ebenfalls das Abstelldrehmoment von 120 Nm. Beim Vergleichsbeispiel 3 nahm das Drehmoment jedoch anschließend leicht ab. Trotz des Drehmoments von 120 Nm wurden bei den Copolyamiden der Vergleichsbeispiele 2 und 3 nur relative Viskositäten von 1,38 bzw. 1,37 erreicht. Die Schmelzviskositäten der Copolyamide der Vergleichsbeispiele 2 und 3 sind also trotz niedriger relativer Viskositäten hoch. Hohe Schmelzviskositäten führen zu Verarbeitungsproblemen, insbesondere bei großen Teilen oder Teilen mit geringer Wandstärke.

Wie der Vergleich des Copolyamids von Beispiel 1 mit den Copolyamiden der Vergleichsbeispiele 2 und 3 zeigt, führt die höhere relative Viskosität zu einer verbesserten Zähigkeit des Copolyamids von Beispiel 1, abzulesen an der verbesserten Reißdehnung, Schlagzähigkeit und Kerbschlagzähigkeit.

Tabelle 2 zeigt des Weiteren, dass das Copolyamid von Beispiel 3 zur Herstellung mikrowellenbeständiger Formkörper geeignet ist.

Der Vergleich der Copolyamide der Beispiele 1 und 3 bis 11 mit den Copolyamiden der Vergleichsbeispiele 12 und 13 zeigt, dass die Kombination eines tiefen dielektrischen Verlustfaktors tan $\delta$ und einer hohen Glasübergangstemperatur nötig ist, um den Mikrowellenofentest zu bestehen.

**Patentansprüche**

**1.** Amorphes oder mikrokristallines Copolyamid (A) welches die folgenden Monomere enthält:

(a) mindestens ein cycloaliphatisches Diamin;
(b) 0,25 bis 4,4 Mol-% mindestens einer dimeren Fettsäure; und
(c) 12 bis 49,75 Mol-% aromatische Dicarbonsäuren ausgewählt aus der Gruppe bestehend aus Isophthalsäure, Terephthalsäure und Naphthalindicarbonsäure, wobei der Anteil an Isophthalsäure 7 bis 44 Mol-% beträgt und
(d) 0 bis 37,75 Mol-% mindestens einer aliphatischen Dicarbonsäure;

wobei der molare Anteil an Isophthalsäure mindestens gleich dem molaren Anteil an Terephthalsäure ist, und wobei sich die Monomere (b), (c) und gegebenenfalls (d) zu 50 Mol-% addieren und sich die molaren Anteile aller im Copolyamid (A) enthaltenen Monomere auf 100 Mol-% ergänzen.

**2.** Amorphes oder mikrokristallines Copolyamid (A) nach Anspruch 1, **dadurch gekennzeichnet, dass** dieses zumindest die folgenden Monomere mit den folgenden Mol-Anteilen enthält:

40 bis 50 Mol-%, bevorzugt 48 bis 50 Mol-% und insbesondere bevorzugt 50 Mol-% cycloaliphatisches Diamin (a); und
1 bis 4,2 Mol-%, bevorzugt 1,5 bis 3,5 Mol-%, insbesondere bevorzugt 1,7 bis 3,0 Mol-% dimere Fettsäure (b); und
14 bis 44 Mol-%, bevorzugt 23 bis 38,5 Mol-%, besonders bevorzugt 25,5 bis 33,3 Mol-% aromatische Dicarbonsäure (c); und gegebenenfalls

5 bis 35 Mol-%, bevorzugt 10 bis 25,5 Mol-% und besonders bevorzugt 15 bis 22,8 Mol-% aliphatische Dicarbonsäure (d);
wobei sich die Anteile aller im Copolyamid (A) enthaltenen Monomere auf 100 Mol-% ergänzen.

3. Amorphes oder mikrokristallines Copolyamid (A) nach Anspruch 1 oder 2, **dadurch gekennzeichnet, dass**

der Anteil an Isophthalsäure bezogen auf die Summe aller Monomere 11,5 bis 27 Mol-% und bevorzugt 12,75 bis 20,55 beträgt und/oder
der Anteil an Terephthalsäure bezogen auf die Summe aller Monomere im Copolyamid 0 bis 22 Mol-%, bevorzugt 11,5 bis 19,25 Mol-% und besonders bevorzugt 12,75 bis 16,65 Mol-% beträgt.

4. Amorphes oder mikrokristallines Copolyamid (A) nach einem der vorhergehenden Ansprüche, **dadurch gekennzeichnet, dass**

dieses eine Glasübergangstemperatur bestimmt nach ISO 11357-2 und -3 (2013) von mindestens 155° C, bevorzugt mindestens 170 °C, insbesondere bevorzugt mindestens 180 °C, besonders bevorzugt mindestens 190 °C und ganz besonders bevorzugt mindestens 200 °C und/oder
eine Lichttransmission gemessen nach ASTM D 1003-13 (2013) an einer daraus hergestellten Platte mit 2 mm Dicke von mindestens 75 %, bevorzugt mindestens 80 % und besonders bevorzugt mindestens 90 % und/oder
einen dielektrischen Verlustfaktor tan 6 bestimmt nach IEC 61189-2-721 (2015) von maximal $8,3 \times 10^{-3}$, bevorzugt $8,0 \times 10^{-3}$, insbesondere bevorzugt maximal $7,0 \times 10^{-3}$ und besonders bevorzugt maximal $6,5 \times 10^{-3}$ und/oder
eine relative Viskosität bestimmt nach ISO 307 (2007) im Bereich von 1,40 bis 2,15, bevorzugt 1,45 bis 1,90, besonders bevorzugt 1,50 bis 1,80, gemessen an einer Lösung von 0,5 g Polyamid in 100 ml m-Kresol bei 20°C, aufweist.

5. Amorphes oder mikrokristallines Copolyamid (A) nach einem der vorhergehenden Ansprüche, **dadurch gekennzeichnet, dass** dieses zumindest die folgenden Monomere enthält:

(a) mindestens eine cycloaliphatische Diaminkomponente ausgewählt aus der Gruppe bestehend aus Bis-(4-amino-3-methyl-cyclohexyl)-methan, Bis-(4-amino-cyclohexyl)-methan, Bis-(4-amino-3-ethyl-cyclohexyl)-methan, Bis-(4-amino-3,5-dimethyl-cyclohexyl)-methan, 2,6-Norbornandiamin oder 2,6-Bis-(aminomethyl)-norbornan, 1,3-Diaminocyclohexan, 1,4-Diaminocyclohexan, Isophorondiamin, 1,3-Bis-(aminomethyl)cyclohexan, 1,4-Bis-(aminomethyl)cyclohexan, 2,2-(4,4'-Diaminodicyclohexyl)propan und Mischungen daraus; und
(b) mindestens eine dimere Fettsäure ausgewählt aus der Gruppe bestehend aus dimeren Fettsäuren mit 36 oder 44 C-Atomen und Mischungen daraus; und
(c) mindestens eine aromatische Dicarbonsäure, ausgewählt aus der Gruppe bestehend aus Isophthalsäure, Terephthalsäure und Mischungen daraus; und gegebenenfalls
(d) mindestens eine aliphatische Dicarbonsäure ausgewählt aus der Gruppe bestehend aus 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,18-Octadecandisäure, 1,3-Cyclohexandicarbonsäure, 1,4-Cyclohexandicarbonsäure und Mischungen daraus.

6. Amorphes oder mikrokristallines Copolyamid (A) nach einem der vorhergehenden Ansprüche, **dadurch gekennzeichnet, dass** dieses zumindest die folgenden Monomere enthält:

(a) mindestens eine cycloaliphatische Diaminkomponente ausgewählt aus der Gruppe bestehend aus Bis-(4-amino-3-methyl-cyclohexyl)-methan, Bis-(4-amino-cyclohexyl)-methan, Bis-(4-amino-3,5-dimethyl-cyclohexyl)-methan und Mischungen daraus und bevorzugt ausgewählt ist aus der Gruppe bestehend aus Bis-(4-amino-3-methyl-cyclohexyl)-methan, Bis-(4-amino-3,5-dimethylcyclohexyl)-methan und Mischungen daraus; und
(b) mindestens eine dimere Fettsäure mit 36 C-Atomen; und
(c) Isophthalsäure und Terephthalsäure; und gegebenenfalls
(d) mindestens eine aliphatische Dicarbonsäure ausgewählt aus der Gruppe bestehend aus 1,12-Dodecandisäure, 1,14-Tetradecandisäure, 1,18-Octadecandisäure und Mischungen daraus.

7. Amorphes oder mikrokristallines Copolyamid (A) nach einem der vorhergehenden Ansprüche, **dadurch gekennzeichnet, dass** das amorphe oder mikrokristalline Copolyamid (A) als weiteres Monomer (d) mindestens eine aliphatische Dicarbonsäure enthält.

**8.** Amorphes oder mikrokristallines Copolyamid (A) nach einem der vorhergehenden Ansprüche, **dadurch gekennzeichnet, dass** das Copolyamid (A) ausgewählt ist aus der Gruppe bestehend aus TMDCI/TMDC12/TMDC36, TMDCI/TMDC14/TMDC36, TMDCI/TMDC9/TMDC36, TMDCI/TMDCCHD/TMDC36, TMDCI/TMDC11/TMDC36, TMDCI/TMDC13/TMDC36, TMDCI/TMDC18/TMDC36, TMDCI/TMDCT/TMDC36, TMDCI/TMDC36, TMDCI/TMDCT/TMDC12/TMDC36, TMDCI/TMDCT/TMDC14/TMDC36, TMDCI/TMDCT/TMDC18/TMDC36, TMDCI/TMDCT/TMDC9/TMDC36, TMDCI/TMDCT/TMDCCH D/TMDC36, TMDCI/TMDCT/TMDC12/TMDCCHD/TMDC36 und Mischungen daraus, wobei TMDC ganz oder teilweise durch MACM ersetzt sein kann, und/oder wobei die dimere Fettsäure mit 36 Kohlenstoffatomen ganz oder teilweise durch eine dimere Fettsäure mit 44 Kohlenstoffatomen ersetzt sein kann.

**9.** Amorphes oder mikrokristallines Copolyamid (A) nach einem der vorhergehenden Ansprüche, **dadurch gekennzeichnet, dass** das Copolyamid (A) ausgewählt ist aus der Gruppe bestehend aus TMDCI/TMDC12/TMDC36, TMDCI/TMDC14/TMDC36, TMDCI/TMDC18/TMDC36, TMDCI/TMDCT/TMDC36, TMDCI/TMDC36, TMDCI/TMDCT/TMDC12/TMDC36, TMDCI/TMDCT/TMDC14/TMDC36, TMDCI/TMDCT/TMDC18/TMDC36 und Mischungen daraus,

wobei TMDC ganz oder teilweise durch MACM ersetzt sein kann, und/oder
wobei die dimere Fettsäure mit 36 Kohlenstoffatomen ganz oder teilweise durch eine dimere Fettsäure mit 44 Kohlenstoffatomen ersetzt sein kann.

**10.** Amorphes oder mikrokristallines Copolyamid (A) nach einem der vorhergehenden Ansprüche, **dadurch gekennzeichnet, dass** das Copolyamid (A) ausgewählt ist aus der Gruppe bestehend aus TMDCI/TMDC12/TMDC36, TMDCI/TMDC14/TMDC36, TMDCI/TMDCT/TMDC36, TMDCI/TMDC36, TMDCI/TMDCT/TMDC12/TMDC36, TMDCI/TMDCT/TMDC14/TMDC36 MACMI/MACM12/MACM36, MACMI/MACM14/MACM36, MACMI/MACMT/MACM36, MACMI/MACM36, MACMI/MACMT/MACM12/MACM36, MACMI/MACMT/MACM14/MACM36 und Mischungen daraus.

**11.** Formmasse enthaltend

mindestens ein Copolyamid (A) nach einem der Ansprüche 1 bis 10, und gegebenenfalls
mindestens einen Zusatzstoff (B), und/oder gegebenenfalls mindestens ein weiteres Polymer (C), welches verschieden vom Copolyamid (A) und verschieden vom Zusatzstoff (B) ist.

**12.** Formmasse nach Anspruch 11 **dadurch gekennzeichnet, dass** die Formmasse die folgende Zusammensetzung aufweist:

70 bis 100 Gew.-%, bevorzugt 80 bis 99,99 Gew.-% und besonders bevorzugt 88,0 bis 99,8 Gew.-% Copolyamid (A), und
0 bis 10 Gew.-%, bevorzugt 0,01 bis 5 Gew.-% und besonders bevorzugt 0,1 bis 2,0 Gew.-% Zusatzstoff (B), und
0 bis 20 Gew.-%, bevorzugt 0 bis 15 Gew.-% und besonders bevorzugt 0,1 bis 10 Gew.-% Polymer (C),
wobei sich die Komponenten (A) bis (C) auf 100 Gew.-% ergänzen.

**13.** Verwendung einer Formmasse nach einem der Ansprüche 11 oder 12 zur Herstellung von Formkörpern.

**14.** Formkörper enthaltend die Formmasse nach einem der Ansprüche 11 oder 12, wobei es bevorzugt ist, dass der Formkörper ausschließlich aus dieser Formmasse besteht.

**15.** Verwendung eines Formkörpers nach Anspruch 14 im Bereich Automobil, Elektro, Elektronik, Haushalt, Gastronomie, Labor, Sport, Freizeit, Spielzeug, Dekor, Verpackung, Optik, Maschinenbau oder Mess-, Regelungs- und Steuertechnik.

## Claims

**1.** Amorphous or microcrystalline copolyamide (A) comprising at least the following monomers:

(a) at least one cycloaliphatic diamine;
(b) 0.25 to 4.4 mol% of at least one dimeric fatty acid; and

(c) 12 to 49.75 mol% of aromatic dicarboxylic acids selected from the group consisting of isophthalic acid, terephthalic acid and naphthalenedicarboxylic acid, wherein the proportion of isophthalic acid is 7 to 44 mol%,and
(d) 0 to 37.75 mol% of at least one aliphatic dicarboxylic acid;

wherein the molar proportion of isophthalic acid is at least equal to the molar proportion of terephthalic acid, and wherein the monomers (b), (c) and optionally (d) add up to 50 mol% and the molar proportions of all the monomers present in the copolyamide (A) add up to 100 mol%.

2. Amorphous or microcrystalline copolyamide (A) according to Claim 1, **characterized in that** it comprises at least the following monomers with the following molar proportions:

40 to 50 mol%, preferably 48 to 50 mol% and especially preferably 50 mol% of cycloaliphatic diamine (a); and
1 to 4.2 mol%, preferably 1.5 to 3.5 mol%, especially preferably 1.7 to 3.0 mol% of dimeric fatty acid (b); and
14 to 44 mol%, preferably 23 to 38.5 mol%, more preferably 25.5 to 33.3 mol%, of aromatic dicarboxylic acid (c); and optionally
5 to 35 mol%, preferably 10 to 25.5 mol% and more preferably 15 to 22.8 mol%, of aliphatic dicarboxylic acid (d);
wherein the proportions of all the monomers present in the copolyamide (A) add up to 100 mol%.

3. Amorphous or microcrystalline copolyamide (A) according to Claim 1 or 2, **characterized in that**

the proportion of isophthalic acid based on the sum total of all the monomers is 11.5 to 27 mol% and preferably 12.75 to 20.55 mol% and/or
the proportion of terephthalic acid based on the sum total of all the monomers in the copolyamide is 0 to 22 mol%, preferably 11.5 to 19.25 mol% and more preferably 12.75 to 16.65 mol%.

4. Amorphous or microcrystalline copolyamide (A) according to any of the preceding claims, **characterized in that**

it has a glass transition temperature determinded according to ISO 11357_2 and -3 (2013) of at least 155°C, preferably at least 170°C, especially preferably at least 180°C, more preferably at least 190°C and most preferably at least 200°C and/or
a light transmittance measured according to ASTM D 1003-13 (2013) on a plaque of thickness 2 mm produced therefrom of at least 75%, preferably at least 80% and more preferably at least 90% and/or
a dielectric loss factor tan $\delta$ determined according to IEC 61189-2-721 (2015) of not more than $8.3 \times 10^{-3}$, preferably $8.0 \times 10^{-3}$, especially not more than $7.0 \times 10^{-3}$ and more preferably not more than $6.5 \times 10^{-3}$ and/or
a relative viscosity determined according to ISO 307 (2007) in the range from 1.40 to 2.15, preferably 1.45 to 1.90, more preferably 1.50 to 1.80, measured on a solution of 0.5 g of polyamide in 100 ml of m-cresol at 20°C.

5. Amorphous or microcrystalline copolyamide (A) according to any of the preceding claims, **characterized in that** it comprises at least the following monomers:

(a) at least one cycloaliphatic diamine component selected from the group consisting of bis(4-amino-3-methylcyclohexyl)methane, bis(4-aminocyclohexyl)methane, bis(4-amino-3-ethylcyclohexyl)methane, bis(4-amino-3,5-dimethylcyclohexyl)methane, norbornane-2,6-diamine or 2,6-bis(aminomethyl)norbornane, 1,3-diaminocyclohexane, 1,4-diaminocyclohexane, isophoronediamine, 1,3-bis(aminomethyl)cyclohexane, 1,4-bis(aminomethyl)cyclohexane, 2,2-(4,4'-diaminodicyclohexyl)propane and mixtures thereof; and
(b) at least one dimeric fatty acid selected from the group consisting of dimeric fatty acids having 36 or 44 carbon atoms and mixtures thereof; and
(c) at least one aromatic dicarboxylic acid selected from the group consisting of isophthalic acid, terephthalic acid and mixtures thereof; and optionally
(d) at least one aliphatic dicarboxylic acid selected from the group consisting of hexane-1,6-dioic acid, nonane-1,9-dioic acid, decane-1,10-dioic acid, undecane-1,11-dioic acid, dodecane-1,12-dioic acid, tridecane-1,13-dioic acid, tetradecane-1,14-dioic acid, octadecane-1,18-dioic acid, cyclohexane-1,3-dicarboxylic acid, cyclohexane-1,4-dicarboxylic acid and mixtures thereof.

6. Amorphous or microcrystalline copolyamide (A) according to any of the preceding claims, **characterized in that** it comprises at least the following monomers:

(a) at least one cycloaliphatic diamine component selected from the group consisting of bis((4-amino-3-methylcyclohexyl)methane, bis((4-aminocyclohexyl)methane, bis((4-amino-3,5-dimethylcyclohexyl)methane and mixtures thereof and is preferably selected from the group consisting of bis((4-amino-3-methylcyclohexyl)methane, bis((4-amino-3,5-dimethylcyclohexyl)methane and mixtures thereof; and
(b) at least one dimeric fatty acid having 36 carbon atoms; and
(c) isophthalic acid and terephthalic acid; and optionally
(d) at least one aliphatic dicarboxylic acid selected from the group consisting of dodecane-1,12-dioic acid, tetradecane-1,14-dioic acid, octadecane-1,18-dioic acid and mixtures thereof.

**7.** Amorphous or microcrystalline copolyamide (A) according to any of the preceding claims, **characterized in that** the amorphous or microcrystalline copolyamide (A) comprises at least one aliphatic dicarboxylic acid as further monomer (d).

**8.** Amorphous or microcrystalline copolyamide (A) according to any of the preceding claims, **characterized in that** the copolyamide (A) is selected from the group consisting of TMDCI/TMDC12/TMDC36, TMDCI/TMDC14/TMDC36, TMDCI/TMDC9/TMDC36, TMDCI/TMDCCHD/TMDC36, TMDCI/TMDC11/TMDC36, TMDCI/TMDC13/TMDC36, TMDCI/TMDC18/TMDC36, TMDCI/TMDCT/TMDC36, TMDCI/TMDC36, TMDCI/TMDCT/TMDC12/TMDC36, TMDCI/TMDCT/TMDC14/TMDC36, TMDCI/TMDCT/TMDC18/TMDC36, TMDCI/TMDCT/TMDC9/TMDC36, TMDCI/TMDCT/TMDCCHD/TMDC36, TMDCI/TMDCT/TMDC12/TMDCCHD/TMDC36 and mixtures thereof, wherein TMDC may be wholly or partly replaced by MACM, and/or wherein the dimeric fatty acid having 36 carbon atoms may be wholly or partly replaced by a dimeric fatty acid having 44 carbon atoms.

**9.** Amorphous or microcrystalline copolyamide (A) according to any of the preceding claims, **characterized in that** the copolyamide (A) is selected from the group consisting of TMDCI/TMDC12/TMDC36, TMDCI/TMDC14/TMDC36, TMDCI/TMDC18/TMDC36, TMDCI/TMDCT/TMDC36, TMDCI/TMDC36, TMDCI/TMDCT/TMDC12/TMDC36, TMDCI/TMDCT/TMDC14/TMDC36, TMDCI/TMDCT/TMDC18/TMDC36 and mixtures thereof,

wherein TMDC may be wholly or partly replaced by MACM, and/or
wherein the dimeric fatty acid having 36 carbon atoms may be wholly or partly replaced by a dimeric fatty acid having 44 carbon atoms.

**10.** Amorphous or microcrystalline copolyamide (A) according to any of the preceding claims, **characterized in that** the copolyamide (A) is selected from the group consisting of TMDCI/TMDC12/TMDC36, TMDCI/TMDC14/TMDC36, TMDCI/TMDCT/TMDC36, TMDCI/TMDC36, TMDCI/TMDCT/TMDC12/TMDC36, TMDCI/TMDCT/TMDC14/TMDC36 MACMI/MACM12/MACM36, MACMI/MACM14/MACM36, MACMI/MACMT/MACM36, MACMI/MACM36, MACMI/MACMT/MACM12/MACM36, MACMI/MACMT/MACM14/MACM36 and mixtures thereof.

**11.** Moulding compound comprising

at least one copolyamide (A) according to any of Claims 1 to 10, and optionally
at least one additive (B), and/or optionally
at least one further polymer (C) different from the copolyamide (A) and different from the additive (B).

**12.** Moulding compound according to Claim 11, **characterized in that** the moulding compound has the following composition:

70% to 100% by weight, preferably 80% to 99.99% by weight and more preferably 88.0 to 99.8% by weight of copolyamide (A), and
0% to 10% by weight, preferably 0.01% to 5% by weight and more preferably 0.1 to 2.0% by weight of additive (B),
0% to 20% by weight, preferably 0% to 15% by weight and more preferably 0.1 to 10% by weight of polymer (C),
wherein components (A) to (C) add up to 100% by weight.

**13.** Use of a moulding compound according to either of Claims 11 and 12 for production of mouldings.

**14.** Moulding comprising the moulding compound according to either of Claims 11 and 12, it being preferable that the moulding compound consists exclusively of said moulding compound.

**15.** Use of a moulding according to Claim 14 in the automotive, electrical, electronic, domestic, gastronomy, laboratory, sport, leisure, toys and games, decoration, packaging, optics, mechanical engineering or measurement technology

and control technology sector.

## Revendications

1. Copolyamide amorphe ou microcristallin (A), lequel contient les monomères suivants :

   (a) au moins une diamine cycloaliphatique ;
   (b) 0,25 à 4,4 % en moles d'au moins un acide gras dimère ; et
   (c) 12 à 49,75 % en moles d'acides dicarboxyliques aromatiques choisis dans le groupe constitué par l'acide isophtalique, l'acide téréphtalique et l'acide naphtalènedicarboxylique, dans lequel le pourcentage d'acide isophtalique atteint 7 à 44 % en moles et
   (d) 0 à 37,75 % en moles d'au moins un acide dicarboxylique aliphatique ;

   dans lequel la fraction molaire d'acide isophtalique est au moins égale à la fraction molaire d'acide téréphtalique, et dans lequel les monomères (b), (c) et éventuellement (d) s'additionnent à 50 % en moles et les fractions molaires de tous les monomères contenus dans le copolyamide (A) se complètent à 100 % en moles.

2. Copolyamide amorphe ou microcristallin (A) selon la revendication 1, **caractérisé en ce que** celui-ci contient au moins les monomères suivants avec les fractions molaires suivantes :

   40 à 50 % en moles, de préférence 48 à 50 % en moles et de préférence encore 50 % en moles de diamine cycloaliphatique (a) ; et
   1 à 4,2 % en moles, de préférence 1,5 à 3,5 % en moles, de préférence encore 1,7 à 3,0 % en moles d'acide gras dimère (b) ; et
   14 à 44 % en moles, de préférence 23 à 38,5 % en moles, de manière particulièrement préférée 25,5 à 33,3 % en moles d'acide dicarboxylique aromatique (c) ; et éventuellement
   5 à 35 % en moles, de préférence 10 à 25,5 % en moles et de manière particulièrement préférée 15 à 22,8 % en moles d'acide dicarboxylique aliphatique (d) ;
   dans lequel les pourcentages de tous les monomères contenus dans le copolyamide (A) se complètent à 100 % en moles.

3. Copolyamide amorphe ou microcristallin (A) selon la revendication 1 ou 2, **caractérisé en ce que**

   le pourcentage d'acide isophtalique par rapport à la somme de tous les monomères atteint 11,5 à 27 % en moles et de préférence 12,75 à 20,55 et/ou
   le pourcentage d'acide téréphtalique par rapport à la somme de tous les monomères dans le copolyamide est 0 à 22 % en moles, de préférence 11,5 à 19,25 % en moles et de manière particulièrement préférée 12,75 à 16,65 % en moles.

4. Copolyamide amorphe ou microcristallin (A) selon l'une quelconque des revendications précédentes, **caractérisé en ce que**

   celui-ci présente une température de transition vitreuse déterminée selon ISO 11357-2 et -3 (2013) d'au moins 155 °C, de préférence d'au moins 170 °C, de préférence encore d'au moins 180 °C, de manière particulièrement préférée d'au moins 190 °C et idéalement d'au moins 200 °C et/ou
   une transmission lumineuse mesurée selon ASTM D 1003-13 (2013) sur une plaque de 2 mm d'épaisseur fabriquée à partir de celui-ci, d'au moins 75 %, de préférence d'au moins 80 % et de manière particulièrement préférée d'au moins 90 % et/ou
   un facteur de perte diélectrique tan 6 déterminé selon CEI 61189-2-721 (2015) de $8,3 \times 10^{-3}$ au maximum, de préférence $8,0 \times 10^{-3}$, de préférence encore $7,0 \times 10^{-3}$ au maximum et de manière particulièrement préférée de $6,5 \times 10^{-3}$ au maximum et/ou
   une viscosité relative déterminée selon ISO 307 (2007) dans la plage de 1,40 à 2,15, de préférence 1,45 à 1,90, de manière particulièrement préférée 1,50 à 1,80, mesurée sur une solution de 0,5 g de polyamide dans 100 ml de m-crésol à 20 °C.

5. Copolyamide amorphe ou microcristallin (A) selon l'une quelconque des revendications précédentes, **caractérisé en ce que** celui-ci contient au moins les monomères suivants :

(a) au moins un composant diamine cycloaliphatique choisi dans le groupe constitué par le bis-(4-amino-3-méthyl-cyclohexyl)-méthane, bis-(4-amino-cyclohexyl)-méthane, bis-(4-amino-3-éthyl-cyclohexyl)-méthane, bis-(4-amino-3,5-diméthyl-cyclohexyl)-méthane, 2,6-norbornanediamine ou 2,6-bis-(aminométhyl)-norbornane, 1,3-diaminocyclohexane, 1,4-diaminocyclohexane, isophoronediamine, 1,3-bis-(aminométhyl)cyclohexane, 1,4-bis-(aminométhyl)cyclohexane, 2,2-(4,4'-diaminodicyclohexyl)propane et leurs mélanges ; et
(b) au moins un acide gras dimère, choisi dans le groupe constitué par les acides gras dimères avec 36 ou 44 atomes de C et leurs mélanges ; et
(c) au moins un acide dicarboxylique aromatique choisi dans le groupe constitué par l'acide isophtalique, l'acide téréphtalique et leurs mélanges ; et éventuellement
(d) au moins un acide dicarboxylique aliphatique choisi dans le groupe constitué par l'acide 1,6-hexanedioïque, l'acide 1,9-nonanedioïque, l'acide 1,10-décanedioïque, l'acide 1,11-undécanedioïque, l'acide 1,12-dodécanedioïque, l'acide 1,13-tridécanedioïque, l'acide 1,14-tétradécanedioïque, l'acide 1,18-octadécanedioïque, l'acide 1,3-cyclohexanedicarboxylique, l'acide 1,4-cyclohexanedicarboxylique et leurs mélanges.

**6.** Copolyamide amorphe ou microcristallin (A) selon l'une quelconque des revendications précédentes, **caractérisé en ce que** celui-ci contient au moins les monomères suivants :

(a) au moins un composant diamine cycloaliphatique choisi dans le groupe constitué par le bis-(4-amino-3-méthyl-cyclohexyl)-méthane, bis-(4-amino-cyclohexyl)-méthane, bis-(4-amino-3,5-diméthyl-cyclohexyl)-méthane et leurs mélanges et est de préférence choisi dans le groupe constitué par le bis-(4-amino-3-méthyl-cyclohexyl)-méthane, bis-(4-amino-3,5-diméthyl-cyclohexyl)-méthane et leurs mélanges ; et
(b) au moins un acide gras dimère avec 36 atomes de C ; et
(c) l'acide isophtalique et l'acide téréphtalique ; et éventuellement
(d) au moins un acide dicarboxylique aliphatique choisi dans le groupe constitué par l'acide 1,12-dodécanedioïque, l'acide 1,14-tétradécanedioïque, l'acide 1,18-octadécanedioïque et leurs mélanges.

**7.** Copolyamide amorphe ou microcristallin (A) selon l'une quelconque des revendications précédentes, **caractérisé en ce que** le copolyamide amorphe ou microcristallin (A) contient comme autre monomère (d) au moins un acide dicarboxylique aliphatique.

**8.** Copolyamide amorphe ou microcristallin (A) selon l'une quelconque des revendications précédentes, **caractérisé en ce que** le copolyamide (A) est choisi dans le groupe constitué par TMDCI/TMDC12/TMDC36, TMDCI/TMDC14/TMDC36, TMDCI/TMDC9/TMDC36, TMDCI/TMDCCHD/TMDC36, TMDCI/TMDC11/TMDC36, TMDCI/TMDC13/TMDC36, TMDCI/TMDC18/TMDC36, TMDCI/TMDCT/TMDC36, TMDCI/TMDC36, TMDCI/TMDCT/TMDC12/TMDC36, TMDCI/TMDCT/TMDC14/TMDC36, TMDCI/TMDCT/TMDC18/TMDC36, TMDCI/TMDCT/TMDC9/TMDC36, TMDCI/TMDCT/TMDCCHD/TMDC36, TMDCI/TMDCT/TMDC12/TMDCCHD/TMDC36 et leurs mélanges, dans lequel TMDC peut être remplacé entièrement ou partiellement par MACM, et/ou
dans lequel l'acide gras dimère avec 36 atomes de carbone peut être remplacé entièrement ou partiellement par un acide gras dimère avec 44 atomes de carbone.

**9.** Copolyamide amorphe ou microcristallin (A) selon l'une quelconque des revendications précédentes, **caractérisé en ce que** le copolyamide (A) est choisi dans le groupe constitué par TMDCI/TMDC12/TMDC36, TMDCI/TMDC14/TMDC36, TMDCI/TMDC18/TMDC36, TMDCI/TMDCT/TMDC36, TMDCI/TMDC36, TMDCI/TMDCT/TMDC12/TMDC36, TMDCI/TMDCT/TMDC14/TMDC36, TMDCI/TMDCT/TMDC18/TMDC36 et leurs mélanges, dans lequel le TMDC peut être remplacé entièrement ou partiellement par le MACM, et/ou
dans lequel l'acide gras dimère avec 36 atomes de carbone peut être remplacé entièrement ou partiellement par un acide gras dimère avec 44 atomes de carbone.

**10.** Copolyamide amorphe ou microcristallin (A) selon l'une quelconque des revendications précédentes, **caractérisé en ce que** le copolyamide (A) est choisi dans le groupe constitué par TMDCI/TMDC12/TMDC36, TMDCI/TMDC14/TMDC36, TMDCI/TMDCT/TMDC36, TMDCI/TMDC36, TMDCI/TMDCT/TMDC12/TMDC36, TMDCI/TMDCT/TMDC14/TMDC36 MACMI/MACM12/MACM36, MACMI/MACM14/MACM36, MACMI/MACMT/MACM36, MACMI/MACM36, MACMI/MACMT/MACM12/MACM36, MACMI/MACMT/MACM14/MACM36 et leurs mélanges.

**11.** Matière à mouler contenant

au moins un copolyamide (A) selon l'une quelconque des revendications 1 à 10, et éventuellement au moins un additif (B), et/ou éventuellement au moins un autre polymère (C), lequel est différent du copolyamide (A) et différent de l'additif (B).

**12.** Matière à mouler selon la revendication 11, **caractérisée en ce que** la matière à mouler présente la composition suivante :

70 à 100 % en poids, de préférence 80 à 99,99 % en poids et de manière particulièrement préférée 88,0 à 99,8 % en poids de copolyamide (A), et
0 à 10 % en poids, de préférence 0,01 à 5 % en poids et de manière particulièrement préférée 0,1 à 2,0 % en poids d'additif (B), et
0 à 20 % en poids, de préférence 0 à 15 % en poids et de manière particulièrement préférée 0,1 à 10 % en poids de polymère (C),
dans laquelle les composants (A) à (C) se complètent à 100 % en poids.

**13.** Utilisation d'une matière à mouler selon l'une quelconque des revendications 11 à 12 pour la fabrication de corps moulés.

**14.** Corps moulé contenant la matière à mouler selon l'une quelconque des revendications 11 ou 12, dans lequel il est préférable que le corps moulé soit exclusivement constitué de cette matière à mouler.

**15.** Utilisation d'un corps moulé selon la revendication 14 dans le domaine de l'automobile, de l'électricité, de l'électronique, du ménage, de la gastronomie, du laboratoire, du sport, des loisirs, des jouets, de la décoration, de l'emballage, de l'optique, de la construction mécanique ou de la technique de mesure, de régulation et de commande.

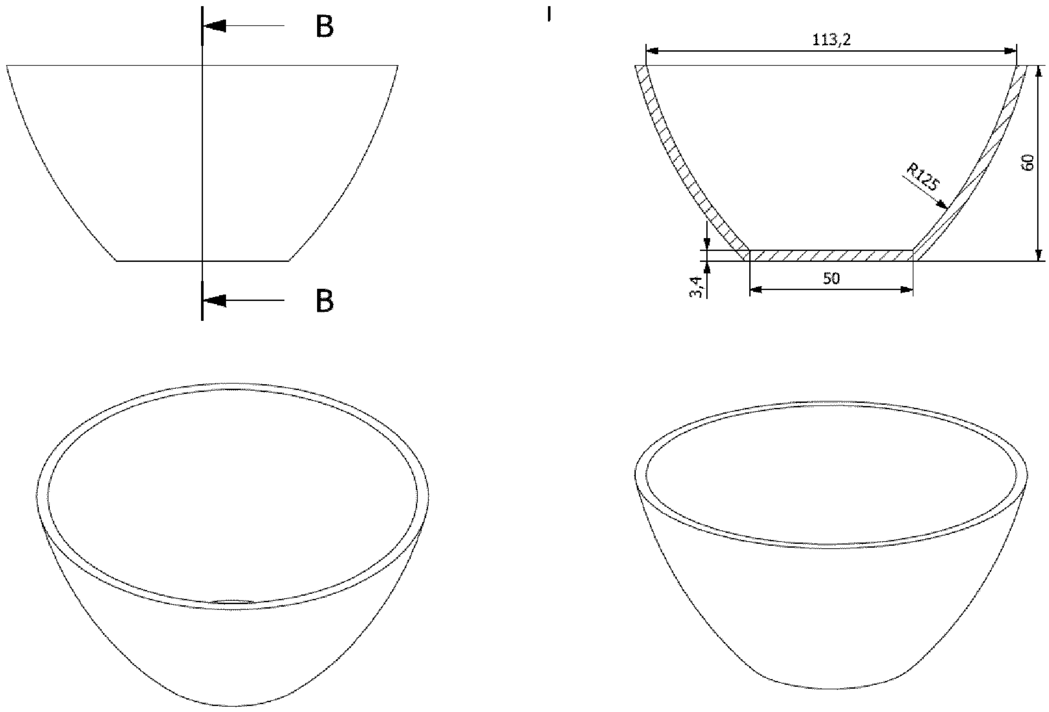


Figur 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0469435 A1
- EP 2957598 A1
- EP 2298830 A1

### In der Beschreibung aufgeführte Nicht-Patentliteratur

- *CHEMICAL ABSTRACTS,* 6864-37-5
- *CHEMICAL ABSTRACTS,* 65962-45-0
- *CHEMICAL ABSTRACTS,* 1761-71-3
- *CHEMICAL ABSTRACTS,* 100-21-0
- *CHEMICAL ABSTRACTS,* 121-95-5
- *CHEMICAL ABSTRACTS,* 68783-41-5
- *CHEMICAL ABSTRACTS,* 693-23-2
- *CHEMICAL ABSTRACTS,* 1076-97-7
- *CHEMICAL ABSTRACTS,* 947-04-6